# FASCICULE DE BREVET EUROPEEN

(11) **EP 0 895 434 B1**
(45) Date de publication et mention de la délivrance du brevet: **28.02.2007**
(21) Numéro de dépôt: 98401749.1
(22) Date de dépôt: 09.07.1998
(51) Int. Cl.: H04Q 7/32

(54) **Appareil électronique, en particulier appareil de radiocommunication, du type susceptible de basculer entre au moins deux modes de fonctionnement**
Elektronisches Gerät, insbesondere ein Funkkommunikationsgerät, welches zwischen mindestens zwei Funktionsweisen umschalten kann
Electronic device, especially a radiocommunication device, of the type that can switch between at least two different function modes

(30) Priorité: 15.07.1997 FR 9708943
(43) Date de publication de la demande: 03.02.1999
(73) Titulaire: ALCATEL, 75008 Paris (FR)
(72) Inventeur: Addra, Modeste, 92800 Puteaux (FR); Massy, Christian, 92310 Sèvres (FR)
(74) Mandataire: El Manouni, Josiane

(56) Documents cités:
- EP-A- 0 315 260
- EP-A- 0 343 528
- EP-A- 0 655 872

## Description

Le domaine de l'invention est celui des appareils électroniques, en particulier un appareil de radiocommunication, qui sont susceptibles de basculer entre au moins deux modes de fonctionnement, l'un des modes correspondant notamment à une consommation électrique réduite.

L'invention s'applique en particulier à des appareils électroniques de radiocommunication qui disposent d'un mode opérationnel et d'un mode veille (ou "standby" en langue anglaise). La présente invention s'applique notamment aux appareils électroniques de radiocommunication embarqués, portables ou à faible autonomie, typiquement des terminaux du type GSM (pour "Global System for Mobile Communications" en anglais) ou PHS (pour "Personal Handy-Phone System" en anglais) ou DECT (pour "Digital European Cordless Telecommunications" en anglais).

On sait en effet que, dans de tels appareils, l'autonomie est un problème crucial. Les appareils doivent être de taille de plus en plus faible, ce qui conduit notamment à limiter l'encombrement des batteries. Cependant, on recherche également une autonomie de plus en plus importante.

Pour cela, on définit classiquement deux modes de fonctionnement :
- un mode "veille", dans lequel l'appareil peut notamment détecter un appel extérieur ;
- un mode "opérationnel", mis en oeuvre lorsque l'appareil est utilisé, par exemple pour une communication.

La plupart du temps, l'appareil se trouve en mode veille. Il est donc souhaitable que ce mode soit le moins consommateur d'énergie possible, tout en assurant bien sûr ses fonctions. Diverses techniques ont déjà été proposées dans ce but.

Ainsi, le document de brevet japonais n° JP5091022 présente un système de commande sélective de l'alimentation des circuits d'un téléphone hertzien, qui permet de minimiser la consommation d'une pile, en confirmant immédiatement le contenu d'un appel et en donnant la priorité à une fonction de radio-messagerie (ou "pager"). Toutefois, ce dispositif s'applique spécifiquement à la gestion de la priorité de fonctionnement du module "pager".

Par le document de brevet EP 0 358 166, on connaît également une technique d'économie de consommation pour radio-téléphone qui distingue deux modes de veille. Une unité intelligente (CPU) commande l'alimentation de différents modules, sélectivement en fonction du niveau du signal d'identification (ID) reçu. Pour le premier mode veille correspondant à un faible signal reçu, seul un circuit de traitement est alimenté. Dans le second mode veille, mis en oeuvre lorsque le niveau du signal détecté excède une valeur prédéterminée, des moyens de détection d'un signal d'identification (ID) émis par une station de base et destiné à révéler au téléphone la présence de la station de base sont également alimentés. Cependant, ce dispositif et cette méthode d'économie reposent sur une analyse du niveau du signal reçu, et une gestion complexe de plusieurs modes veille.

Le document de brevet US 5,054,052, présente un circuit qui commande sélectivement l'alimentation de modules traitant respectivement deux canaux d'un système de téléphonie mobile. Plus précisément, ce circuit alimente soit les modules de traitement d'un canal de radio-messagerie (ou "paging"), soit ceux d'un canal de transmission portant sur des signaux de parole. Cependant, ce dispositif n'est utilisable que si le téléphone met en oeuvre deux canaux, et donc deux chaînes de traitement différentes, fonctionnant sur deux fréquences différentes.

Ces solutions connues présentent donc de nombreux inconvénients. Notamment elles imposent l'alimentation permanente d'un module de commande (classiquement le micro-processeur), qui consomme une partie non négligeable de l'énergie totale, alors que l'objectif principal est d'obtenir une réduction de la consommation.

L'invention a notamment pour objectif de pallier ces différents inconvénients de l'état de la technique.

Plus précisément, un premier objectif de l'invention est de fournir un appareil électronique tel qu'un terminal de radiocommunication, pouvant fonctionner selon au moins deux modes, un mode veille et un mode opérationnel, et dont l'autonomie est augmentée par rapport aux techniques connues.

Un objectif complémentaire est de fournir un tel appareil pour lequel, notamment, la consommation d'énergie pour le mode veille de l'appareil est réduite.

En d'autres termes, un objectif est de fournir un tel appareil permettant d'augmenter l'autonomie des batteries.

Un objectif supplémentaire est encore de fournir un tel appareil ne basculant en mode opérationnel que lorsque les conditions de fonctionnement le requièrent expressément.

Ces différents objectifs, ainsi que d'autres qui apparaîtront par la suite, sont atteints selon l'invention à l'aide de l'appareil électronique notamment appareil de radiocommunication, du type susceptible de basculer entre au moins deux modes de fonctionnement :
- un mode opérationnel mis en oeuvre dans une chaîne principale, assurant les fonctions principales dudit appareil électronique ;
- un mode veille, dans lequel ledit appareil électronique est en attente d'un événement impliquant le passage au mode opérationnel.
ledit appareil électronique comprenant des moyens de veille à faible consommation électrique, activés à la place de moyens principaux correspondants dans ladite chaîne principale lorsque ledit appareil est en mode veille, assurant la détection d'événements exceptionnels parmi les signaux reçus par ledit appareil de façon à activer ladite chaîne principale dudit appareil électronique.

Le principe général de l'invention consiste donc à associer des moyens spécifiques dédiés à certaines fonctions du fonctionnement de l'appareil, qui consomment moins d'énergie que les ressources utilisées de façon classique et qui permettent notamment l'analyse des signaux reçus par l'appareil.

Ces fonctions doivent être assurées de façon permanente par l'appareil en mode veille, et sont donc selon l'invention, intégrées dans des moyens propres à ce mode veille, et non dans une partie des moyens appartenant au mode opérationnel.

Il est à noter que cette approche est tout à fait nouvelle pour l'homme du métier. En effet, celui-ci cherche toujours à réduire le nombre de composants d'un appareil, tant pour en réduire la consommation que le coût. En revanche, l'invention propose l'ajout de moyens supplémentaires spécifiques. Toutefois, du fait que ceux-ci sont conçus précisément pour assurer les tâches du mode veille, on limite fortement la consommation. Il n'est notamment pas nécessaire que l'unité centrale gérant l'appareil en mode opérationnel soit alimentée contrairement aux techniques classiques.

En d'autres termes, seuls les moyens nécessaires au fonctionnement en cours de l'appareil sont activés, ce qui permet de réduire les ressources utilisées et donc de limiter la consommation d'énergie.

Selon un mode de réalisation préférentiel de l'invention, lesdits moyens de veille comprennent notamment des moyens d'analyse périodique des messages de signalisation reçus par ledit appareil.

Ainsi, les moyens de veille analysent la nature des messages de signalisation reçus par l'appareil. A partir de cette analyse, les moyens de veille décident de rester en fonction, si les messages de signalisation ne concernent pas l'appareil, ou transmettent un ordre de réveil, ou d'activation des moyens du mode opérationnel qui traitent alors les opérations qui leur reviennent, dans le cas contraire.

Selon une variante avantageuse, ledit appareil comprend des moyens de sélection desdits moyens principaux de la chaîne principale ou desdits moyens de veille, en fonction notamment d'une information de réveil délivrée par lesdits moyens de veille.

Ainsi, selon l'invention, en mode veille, la détection d'événements exceptionnels, tels que l'arrivée d'un appel entrant, entraîne la transmission par ces moyens de sélection, d'une information de réveil aux moyens du mode opérationnel. Parallèlement, les moyens de veille sont désactivés.

Inversement en mode opérationnel, la détection d'un événement exceptionnel tel qu'une fin de communication, les moyens de sélection interviennent pour piloter le basculement en mode veille.

Dans un mode de réalisation préférentiel de l'invention, lesdits moyens de sélection font partie d'un module intelligent assurant entre autres également la gestion de fonctions propres audit mode opérationnel.

Ainsi, les moyens de sélection peuvent être intégrés dans un micro-contrôleur, qui gère de surcroît des fonctions propres au mode opérationnel, telles que la gestion d'une communication.

En d'autres termes, on utilise un module existant, auquel on confie la tâche supplémentaire de sélectionner les moyens de veille ou les moyens principaux de la chaîne principale à activer, ce qui permet d'optimiser l'utilisation des ressources existantes.

En conséquence, aucune cellule matérielle supplémentaire (ou "hardware" en langue anglaise) n'est nécessaire pour assurer les fonctions des moyens de sélection.

Avantageusement, ledit module intelligent comprend des moyens destinés à analyser des messages de signalisation provenant :
- desdits moyens de veille et correspondant auxdits événements exceptionnels destinés auxdits moyens de la chaîne principale, de façon à activer lesdits moyens de la chaîne principale ;
- desdits moyens principaux de la chaîne principale et correspondant auxdits événements exceptionnels destinés auxdits moyens de veille, de façon à activer lesdits moyens de veille.

Préférentiellement, lesdits moyens de veille comprennent un composant spécifique à faible consommation électrique.

Ainsi, l'invention permet d'obtenir un appareil ayant une consommation globale en mode veille suffisamment inférieure à celle du mode opérationnel. Notamment, on évite la consommation élevée d'un micro-contrôleur, qui remplirait les mêmes fonctions.

Il peut entre autres s'agir d'un ASIC (pour "Application Specific Integrated Circuit" en langue anglaise) ou bien d'un processeur de signaux numériques (ou DSP pour "Digital Signal Processor" en langue anglaise) avec un programme spécifique, enregistré dans une mémoire locale, pour effectuer toutes les fonctions à assurer par le mode veille.

Cet opérateur dédié automatise exclusivement certaines fonctions du mode veille afin d'optimiser principalement la consommation d'énergie.

La mise en oeuvre d'une telle technique est donc peu complexe.

De façon avantageuse, lesdits moyens principaux de la chaîne principale assure au moins une des fonctions appartenant au groupe comprenant :
- l'émission de signaux ;
- la réception de signaux ;
- le codage canal ;
- le codage parole;
- le décodage canal ;
- le décodage parole ;
- la modulation ;
- la démodulation.

Cette liste est bien sûr non exhaustive.

Préférentiellement, lesdits moyens de veille assure au moins une des fonctions appartenant au groupe comprenant :
- la réception de signaux ;
- l'analyse des messages de signalisation reçus ;
- la démodulation ;
- l'émission de signaux correspondant aux événements exceptionnels destinés à réveiller les moyens de sélection, afin d'activer les moyens du mode opérationnel ;
- l'émission de données de signalisation à la station de base ;
- le traitement automatique de certaines opérations ;
- le décodage canal.

On constate ainsi que les moyens de veille assurent certaines fonctions prises en compte aussi par les moyens du mode opérationnel, mais pas toutes (d'où un gain en consommation d'énergie d'une part, et en complexité d'autre part).

Il est clair que ce groupe de fonctions réalisées par les moyens de veille est également extensible.

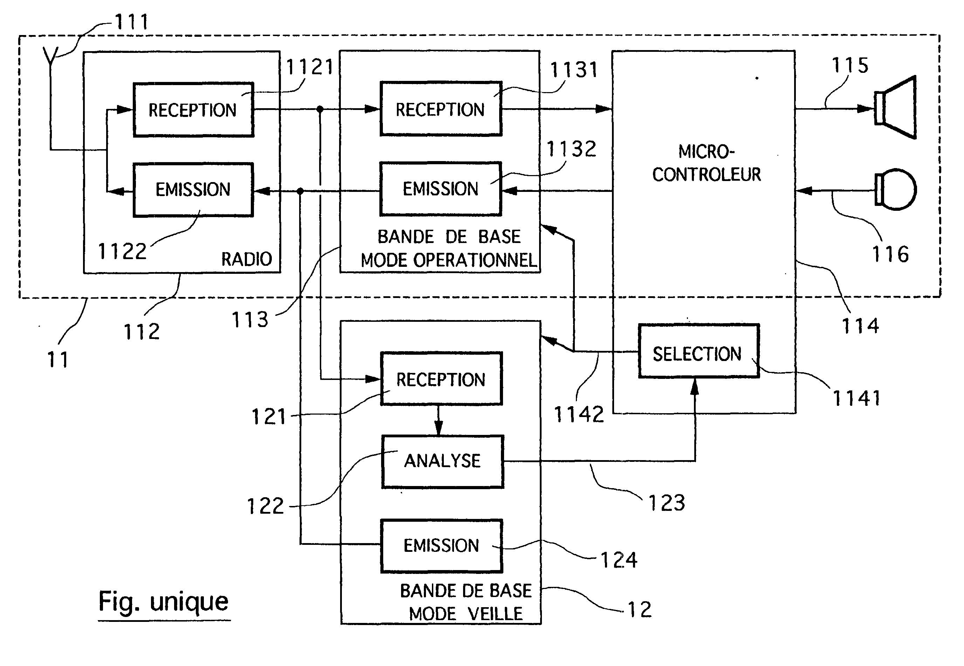

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels la figure unique est un schéma synoptique général illustrant le principe de l'invention. Le terminal de radio-téléphonie comprend une chaîne classique 11, et un module 12 supplémentaire et nouveau, dédié au mode veille.

La chaîne de traitement 11, que l'on ne décrit pas en détail, puisqu'elle est connue en soi, et peut être réalisée de très nombreuses manières, comprend par exemple :
- au moins une antenne 111 d'émission et/ou de réception de signaux hertziens;
- un module radio 112, comprenant les moyens 1121 nécessaires au traitement radio des signaux reçus par l'antenne 111 (classiquement amplification, filtrage, transfert en bande de base, conversion analogique/numérique,...) et les moyens 1122 nécessaires à l'émission de signaux via l'antenne 111 (classiquement, de même, conversion numérique/analogique, transfert dans la bande des radio-fréquences, filtrage, amplification....) ;
- un module 113 assurant le traitement des communications en bande de base, en réception 1131 (décodage canal, désentrelacement, décodage source,...) et en émission 1132 (codage source, entrelacement, codage canal,...) ;
- un micro-contrôleur 114 gérant l'ensemble des opérations, en mode opérationnel, et assurant notamment l'alimentation en signal de parole d'au moins un haut-parleur 115, et le recueil de signaux de parole à transmettre, via au moins un micro-phone 116.

Dans les systèmes connus, ce micro-contrôleur 114 reste en permanence en activité, que l'on soit en mode veille ou en mode opérationnel. Il pilote notamment l'activation ou la désactivation des moyens de traitement 113.

Selon l'invention en revanche, le micro-contrôleur 114 peut être complètement désactivé en mode veille. En effet, le module nouveau 12 assure seul l'ensemble des fonctions nécessaires.

Bien sûr, ce nouveau module 12 de mode veille est conçu de façon à consommer moins d'énergie que le micro-contrôleur 114. Cela est possible notamment du fait que ce module 12 n'assure que, spécifiquement, un nombre réduit d'opérations strictement nécessaires au mode de veille.

Ainsi, en mode veille, les modules 113 et 114 sont désactivés. Les signaux reçus et ramenés en bande de base par les moyens 1121 alimentent les moyens 121 de réception du module de veille 12. Ces moyens 121 de réception assurent des fonctions similaires à celles du module 1131. Selon une première variante de réalisation de l'invention, on ajoute un simple ASIC ou DSP, consommant moins que le micro-contrôleur 114, pour remplir les fonctions du module 12 dédié au mode veille.

Toutefois, les opérations sont simplifiées, du fait que seules les données de signalisation doivent être traitées, et non des données de parole. Par exemple, la mémoire tampon du désentrelaceur doit avoir une profondeur de 8 trames lorsqu'il s'agit de parole, alors qu'une profondeur de 4 trames est suffisante pour les données de signalisation. La mémoire allouée aux moyens 121 peut donc être réduite.

Les moyens 121 de réception comprennent donc notamment des moyens de décodage canal, désentrelacement, décodage source,... spécifiquement dédiés aux données de signalisation.

Ces données de signalisation sont transmises à des moyens d'analyse 122, qui ont notamment pour fonction de déterminer si ces données sont destinées ou non au terminal. A nouveau, ces moyens 122 d'analyse peuvent être très simples, car les données de signalisation à repérer sont en nombre réduit. On comprend qu'un micro-contrôleur ne soit pas nécessaire pour effectuer ces opérations.

La plupart du temps, les données de signalisation ne sont pas destinées au terminal, et on reste en mode veille. Lorsqu'elles sont destinées au terminal (annonce d'une communication entrante, par exemple), les moyens d'analyse 122 effectuent une simple opération, à savoir la transmission d'une commande de réveil 123 au micro-contrôleur 114.

Le micro-contrôleur 114 intègre, en supplément de ses fonctions classiques, des moyens 1141 de sélection, qui reçoivent la commande de réveil 123. Le micro-contrôleur entre alors en fonction, et active le module 113 du mode opérationnel, via une commande de sélection 1142, qui assure parallèlement la désactivation des moyens 12 du mode veille.

A partir de ce moment, le terminal fonctionne de façon classique, sur la chaîne de traitement 11. Lorsque la mise en oeuvre du mode opérationnel n'est plus nécessaire (fin de communication par exemple), le micro-contrôleur 114, qui a géré la communication génère, via ses moyens de sélection 1141, une nouvelle commande de sélection 1142, qui entraîne la désactivation des moyens 113 du mode opérationnel et l'activation des moyens 12 du mode de veille. Puis, le micro-contrôleur 114 cesse ses activités, jusqu'à ce que les moyens de veille 12 l'activent à nouveau.

Par ailleurs, en mode veille, le module de veille 12 assure éventuellement l'émission régulière 124 de données de signalisation nécessaires (par exemple pour fournir à la station de base des indications de présence, et éventuellement de localisation...). A nouveau, du fait que ces moyens 124 sont dédiés à l'émission de données prédéterminées, ils sont très simples (par rapport aux moyens 1132) et peuvent donc être conçus de façon à consommer peu d'énergie.

Ainsi, l'ajout d'un module 12 supplémentaire permet d'augmenter l'autonomie de l'appareil, du fait notamment qu'il n'est plus nécessaire d'alimenter en permanence le micro-contrôleur 114.

Selon une seconde variante de réalisation de l'invention, un ASIC unique intègre les fonctions remplies par le module 12 dédié au mode veille et le module 113 dédié au mode opérationnel.

## Revendications

1. Appareil électronique, notamment appareil de radiocommunication, du type susceptible de basculer entre au moins deux modes de fonctionnement :
- un mode opérationnel mis en oeuvre dans une chaîne principale (11), assurant les fonctions principales dudit appareil électronique ;
- un mode veille, dans lequel ledit appareil électronique est en attente d'un événement impliquant le passage au mode opérationnel,
appareil électronique **caractérisé en ce qu'**il comprend des moyens de veille (12) à faible consommation électrique, activés à la place de moyens principaux (113.114) correspondants dans ladite chaîne principale (11) lorsque ledit appareil est en mode veille, assurant la détection d'événements exceptionnels parmi les signaux reçus par ledit appareil, de façon à activer ladite chaîne principale (11) dudit appareil électronique.

2. Appareil selon la revendication 1, **caractérisé en ce que** lesdits moyens de veille (12) comprennent des moyens d'analyse (122) périodique des messages de signalisation reçus par ledit appareil.

3. Appareil selon la revendication 1, **caractérisé en ce qu'**il comprend des moyens de sélection (1141) desdits moyens principaux (113) de la chaîne principale et desdits moyens de veille (12), en fonction notamment d'une information de réveil délivrée par lesdits moyens de veille (12).

4. Appareil selon la revendication 3, **caractérisé en ce que** lesdits moyens de sélection (1141) font partie d'un module intelligent (114) assurant entre autres la gestion de fonctions propres audit mode opérationnel.

5. Appareil selon l'une quelconque des revendications 3 et 4, **caractérisé en ce que** ledit module intelligent (114) comprend des moyens destinés à analyser des messages de signalisation provenant :
- desdits moyens de veille (12) et correspondant auxdits événements exceptionnels destinés auxdits moyens principaux (113,114) de la chaîne principale (11), de façon à activer lesdits moyens (113,114) de la chaîne principale (11) ;
- desdits moyens principaux (113.114) de la chaîne principale (11) et correspondant auxdits événements exceptionnels destinés auxdits moyens de veille (12), de façon à activer lesdits moyens de veille (12).

6. Appareil selon l'une quelconque des revendications 1 à 5. **caractérisé en ce que** lesdits moyens de veille (12) comprennent un composant spécifique à faible consommation électrique.

7. Appareil selon l'une quelconque des revendications 1 à 6, **caractérisé en ce que** lesdits moyens principaux (113,114) de la chaîne principale (11) assure au moins une des fonctions appartenant au groupe comprenant :
- l'émission de signaux ;
- la réception de signaux ;
- le codage canal ;
- le codage parole;
- le décodage canal ;
- le décodage parole ;
- la modulation ;
- la démodulation.

8. Appareil selon l'une quelconque des revendications 1 à 7, **caractérisé en ce que** lesdits moyens de veille (12) assure au moins une des fonctions appartenant au groupe comprenant :
- la réception de signaux ;
- l'analyse des messages de signalisation reçus ;
- la démodulation ;
- l'émission de signaux correspondant aux événements exceptionnels destinés à réveiller les moyens de sélection (1141), afin d'activer les moyens du mode opérationnel (113,114) ;
- l'émission de données de signalisation à la station de base ;
- le traitement automatique de certaines opérations ;
- le décodage canal .

## Claims

1. Electronic device, in particular radio communication device, of the type liable to switch between at least two modes of operation:
- an operational mode used in a main subsystem (11), providing the main functions of said electronic device;
- a standby mode, in which said electronic device waits for an event involving the change to the operational mode,
electronic device **characterised in that** it comprises low electrical energy consumption standby means (12) activated instead of the corresponding main means (113, 114) in said main subsystem (11) when said device is in standby mode, handling the detection of exceptional events in the signals received by said device, to activate said main subsystem (11) of said electronic device.

2. Device according to claim 1, **characterised in that** said standby means (12) comprise means (122) for periodic analysis of signalling messages received by said device.

3. Device according to claim 1, **characterised in that** it comprises means (1141) for selection of said main means (113) of the main subsystem and said standby means (12) as a function in particular of wake-up information delivered by said standby means (12).

4. Device according to claim 3, **characterised in that** said selection means (1141) form part of an intelligent module (114) handling *inter alia* the management of functions specific to said operational mode.

5. Device according to either of claims 3 and 4, **characterised in that** said intelligent module (114) comprises means adapted to analyse signalling messages coming from:
- said standby means (12) and corresponding to said exceptional events addressed to said main means (113, 114) of the main subsystem (11) to activate said means (113, 114) of the main subsystem (11);
- said main means (113, 114) of the main subsystem (11) and corresponding to said exceptional events addressed to said standby means (12), to activate said standby means (12).

6. Device according to any one of claims 1 to 5, **characterised in that** said standby means (12) comprise a specific component with low electrical energy consumption.

7. Device according to any one of claims 1 to 6, **characterised in that** said main means (113, 114) of the main subsystem (11) handle at least one of the functions belonging to the group comprising:
- sending signals;
- receiving signals;
- channel coding;
- speech coding;
- channel decoding;
- speech decoding;
- modulation;
- demodulation.

8. Device according to any one of claims 1 to 7, **characterised in that** said standby means (12) handle at least one of the functions belonging to the group comprising:
- receiving signals;
- analysing received signalling messages;
- demodulation;
- sending signals corresponding to the exceptional events intended to wake up the selection means (1141) in order to activate the means (113, 114) of the operational mode;
- sending signalling data to the base station;
- automatic processing of certain operations;
- channel decoding.

## Patentansprüche

1. Elektronisches Gerät, insbesondere ein Funkkommunikationsgerät, das zwischen mindestens zwei Funktionsweisen umschalten kann:
- einem Betriebsmodus, der in der Hauptkette (11) umgesetzt wird und die Hauptfunktionen des genannten elektronischen Geräts gewährleistet;
- einem Bereitschaftsmodus, in dem das elektronische Gerät auf ein Ereignis wartet, das das Umschalten in den Betriebsmodus auslöst,
wobei das elektronische Gerät **dadurch gekennzeichnet ist, dass** es Bereitschaftsvorrichtungen (12) mit geringem Stromverbrauch umfasst, die anstelle der entsprechenden Hauptvorrichtungen (113, 114) in der genannten Hauptkette (11) aktiviert werden, wenn sich das genannte Gerät im Bereitschaftsmodus befindet, wobei die Erfassung von außergewöhnlichen Ereignissen anhand der von dem genannten Gerät empfangenen Signale gewährleistet wird, um die genannte Hauptkette (11) des genannten elektronischen Geräts zu aktivieren.

2. Gerät gemäß Anspruch 1, **dadurch gekennzeichnet, dass** die genannten Bereitschaftsvorrichtungen (12) Vorrichtungen (122) zur regelmäßigen Analyse der Signalisierungsmeldungen umfassen, die das genannte Gerät empfängt.

3. Gerät gemäß Anspruch 1, **dadurch gekennzeichnet, dass** es Auswahlvorrichtungen (1141) für die genannten Hauptvorrichtungen (113) der Hauptkette und die genannten Bereitschaftsvorrichtungen (12) umfasst, die insbesondere von einer Einschaltinformation abhängig sind, die von den genannten Bereitschaftsvorrichtungen (12) übermittelt wird.

4. Gerät gemäß Anspruch 3, **dadurch gekennzeichnet, dass** die genannten Auswahlvorrichtungen (1141) Bestandteil eines intelligenten Moduls (114) sind, das unter anderem die Steuerung der speziellen Funktionen im Betriebsmodus gewährleistet.

5. Gerät gemäß einem beliebigen der Ansprüche 3 und 4, **dadurch gekennzeichnet, dass** das genannte intelligente Modul (114) Vorrichtungen umfasst, die zur Analyse der Signalisierungsmeldungen bestimmt sind, die:
- von den genannten Bereitschaftsvorrichtungen (12) stammen und den genannten außergewöhnlichen Ereignissen entsprechen, die für die Hauptvorrichtungen (113, 114) der Hauptkette (11) bestimmt sind, um die genannten Vorrichtungen (113, 114) der Hauptkette (11) zu aktivieren;
- von den genannten Hauptvorrichtungen (113, 114) der Hauptkette (11) stammen und den genannten außergewöhnlichen Ereignissen entsprechen, die für die Bereitschaftsvorrichtungen (12) bestimmt sind, um die genannten Bereitschaftsvorrichtungen (12) zu aktivieren.

6. Gerät gemäß einem beliebigen der Ansprüche 1 bis 5, **dadurch gekennzeichnet, dass** die genannten Bereitschaftsvorrichtungen (12) ein spezifisches Bauteil mit geringem Stromverbrauch umfassen.

7. Gerät gemäß einem beliebigen der Ansprüche 1 bis 6, **dadurch gekennzeichnet, dass** die genannten Hauptvorrichtungen (113, 114) der Hauptkette (11) mindestens eine der Funktionen aus der folgenden Gruppe gewährleisten:
- Übertragung von Signalen;
- Empfang von Signalen;
- Kanal-Codierung;
- Sprach-Codierung;
- Kanal-Decodierung;
- Sprach-Decodierung;
- Modulation;
- Demodulation.

8. Gerät gemäß einem beliebigen der Ansprüche 1 bis 7, **dadurch gekennzeichnet, dass** die genannten Bereitschaftsvorrichtungen (12) mindestens eine der Funktionen aus der folgenden Gruppe gewährleisten:
- Empfang von Signalen;
- Analyse der empfangenen Signalisierungsmeldungen;
- Demodulation;
- Übertragung von Signalen, die außergewöhnlichen Ereignissen entsprechen, die zum Einschalten der Auswahlvorrichtungen (1141) bestimmt sind, um die Vorrichtungen des Betriebsmodus (113, 114) zu aktivieren;
- Übertragung von Signalisierungsdaten an die Basisstation;
- Automatische Verarbeitung bestimmter Vorgänge;
- Kanal-Decodierung.
